Europäisches Patentamt

European Patent Office

Office européen des brevets

(19)

(11) **EP 0 944 847 B1**

(12) **FASCICULE DE BREVET EUROPEEN**

(45) Date de publication et mention
de la délivrance du brevet:
**04.09.2002   Bulletin 2002/36**

(21) Numéro de dépôt: **98947618.9**

(22) Date de dépôt: **07.10.1998**

(51) Int Cl.[7]: **G01V 1/28**

(86) Numéro de dépôt international:
**PCT/FR98/02140**

(87) Numéro de publication internationale:
**WO 99/019750 (22.04.1999 Gazette 1999/16)**

(54) **PROCEDE DE TRAITEMENT SISMIQUE ET NOTAMMENT PROCEDE DE PROSPECTION SISMIQUE 3D METTANT EN OEUVRE UNE MIGRATION DES DONNEES SISMIQUES**

VERFAHREN ZUR SEISMISCHEN VERARBEITUNG UND INSBESONDERE SEISMISCHES PROSPEKTIONSVERFAHREN ZUR DURCHFÜHRUNG EINER SEISMISCHEN MIGRATION

METHOD FOR SEISMIC PROCESSING AND IN PARTICULAR FOR THREE-DIMENSIONAL SEISMIC EXPLORATION USING SEISMIC DATA MIGRATION

(84) Etats contractants désignés:
**FR GB**

(30) Priorité: **10.10.1997  FR 9712691**

(43) Date de publication de la demande:
**29.09.1999   Bulletin 1999/39**

(73) Titulaire: **COMPAGNIE GENERALE DE GEOPHYSIQUE**
**F-91300 Massy (FR)**

(72) Inventeur: **PICA, Antonio**
**F-92170 Vanves (FR)**

(74) Mandataire: **Martin, Jean-Jacques**
**Cabinet Régimbeau**
**20, rue de Chazelles**
**75847 Paris cedex 17 (FR)**

(56) Documents cités:
**US-A- 5 394 325**

- **FARIA E L ET AL: "Traveltime computation in transversely isotropic media" GEOPHYSICS, FEB. 1994, USA, vol. 59, no. 2, pages 272-281, XP002073146 ISSN 0016-8033**
- **VIDALE J E: "Finite-difference calculation of traveltimes in three dimensions" GEOPHYSICS, MAY 1990, USA, vol. 55, no. 5, pages 521-526, XP002073147 ISSN 0016-8033**
- **ALDRIDGE DAVID F: "Linearization of the eikonal equation" GEOPHYSICS;GEOPHYSICS OCT 1994 SOC OF EXPLORATION GEOPHYSICISTS, TULSA, OK, USA, vol. 59, no. 10, octobre 1994, pages 1631-1632, XP002073148**

EP 0 944 847 B1

**Description**

La présente invention est relative aux procédés de traitement sismique et trouve en particulier avantageusement application dans les procédés de prospection sismique 3D mettant en oeuvre une migration des données sismiques.

La nécessité d'une plus grande qualité d'imagerie des structures sismiques conduit à utiliser des traitements de migration sur les données sismiques avant sommation.

Or, un problème majeur rencontré pour la migration de données sismiques réside dans la détermination des temps de parcours entre une position donnée en surface et un cube de positions en profondeur.

Il est en effet souhaitable, pour obtenir des traitements de migration de qualité, de pouvoir disposer d'une grande précision sur les calculs de temps de parcours.

Mais les traitements actuels, s'ils permettent d'accéder à des précisions très satisfaisantes, présentent l'inconvénient de nécessiter un grand nombre de calculs. Les temps de calcul qui en résultent sont particulièrement longs.

Un but de l'invention est de proposer un traitement qui permet d'accéder à des déterminations d'une grande précision, pour des temps de calcul réduits.

Classiquement, les traitements de migration utilisent des calculs de sommation à intégrale de Kirchhoff et mettent en oeuvre une approximation des fonctions dites de Green par résolution de l'équation eikonal au moyen d'un calcul en différences finies.

Pour des présentations de différentes méthodes de résolution de l'équation eikonal, on pourra avantageusement se référer aux différentes publications suivantes :

(1) Podvin, P., and Lecompte, I., 1991, Finite difference computation of traveltimes in very contrasted velocity models : a massively parallel approach and its associated tools : Geophys. J. Int., 105, 271-284,

(2) Schneider, W. 1993, Robust, efficient upwind finite-difference traveltime calculations in 3D : 1993 DEG Annual Meeting Expanded Abstracts ;

(3) Fowler, P., 1994, Finite-differences solutions of the 3D eikonal equation in spherical coordinates : 1994 SEG Annual Meeting Expanded Abstracts ;

(4) Klimes, L., 1996 : Grid travel-time tracing : second-order method for the first arrivals in smooth media, PAGEOPH, 148, 539-563,

(5) Geoltrain, S., and Brac. J., 1993, Can we image complex structures with first-arrival traveltimes ? : Geophysics, 51, 1685-1688 ;

(6) Nichols, D.E., 1996, Maximum energy traveltimes calculated in the seismic frequency band : Geophysics, 61, 253-263 ;

(7) Kessler, D., and Canales, L., 1995, Mixed-grid solution of the 3-D Eikonal équation : 1995 SEG Annual Meeting Expanded Abstracts ;

(8) Mendes, M., Morgado, L., Buxo, A., 1997, Interpolation sensitivity of the 3D ASI : Final Report EEC Joule contract JOU2-CT93-0321, 3D Asymptotic Seismic Imaging, 251-266 ;

(9) Pica, A., 1997, Maximum energy traveltimes and amplitudes calculated in a lowfrequency band, 1997 59th EAGE Conference Extende Abstracts.

On rappelle qu'en coordonnées cartésiennes, l'équation eikonal s'écrit :

$$t_x{}^2 + t_y{}^2 + t_z{}^2 = 1/c^2$$

avec $t_x = \delta t/\delta x$, $t_y = \delta t/\delta y$ et $t_z = \delta t/\delta z$,

où $\delta t/\delta x$, $\delta t/\delta y$ et $\delta t/\delta z$ représentent des estimations des dérivées partielles des temps de parcours par rapport aux coordonnées cartésiennes x, y, z et où c représente la vitesse de propagation.

Cette équation eikonal est généralement résolue par un calcul d'intégration descendant, le long d'un axe z dirigé vers le sous-sol.

Pour résoudre l'équation eikonal, il a été montré dans la publication (8) qu'une plus grande précision pouvait être obtenue en utilisant, non pas des interpolations linéaires, mais la relation quadratique reliant les temps de propagation aux coordonnées d'une part du point considéré et d'autre part du point source, à savoir :

$$[1] \qquad t^2 = 1 / v^2 \, [(x - x_s)^2 + (y - y_s)^2 + (z - z_s)^2] = d^2/v^2$$

relation dans laquelle :

- d est la distance entre le point considéré, de coordonnées (x, y, z), et le point source, de coordonnées $(x_s, y_s, z_s)$ ;
- t est le temps de parcours ;
- v est une variable qui a la dimension d'une vitesse et que l'on appellera célérité dans toute la suite du présent texte (pour la distinguer de la vitesse de propagation c).

L'invention propose quant à elle d'interpoler non pas la variable temporelle t, mais la variable v de célérité.

Ainsi, l'invention propose un procédé de traitement sismique dans lequel pour déterminer les temps de parcours d'une onde acoustique entre une source sismique et un point du sous-sol, on résolve l'équation eikonal, caractérisé en ce que pour résoudre l'équation eikonal, on met en oeuvre un traitement d'extrapolation sur la variable célérité, laquelle est égale au rapport de la distance entre la source sismique et le point du sous-sol sur le temps de propagation entre ladite source et ledit point.

Elle propose également un procédé de prospection sismique 3D selon lequel :

- on acquiert des données sismiques au moyen d'au moins une source acoustique et de capteurs sismiques,
- on traite ces données sismiques pour obtenir une information sur la géologie du sous-sol, en mettant en oeuvre une migration desdites données

caractérisé en ce que pour la mise en oeuvre du traitement de migration on détermine préalablement les temps de parcours des ondes acoustiques en mettant en oeuvre le procédé selon l'une des revendications précédentes.

D'autres caractéristiques et avantages de l'invention ressortiront encore de la description qui suit. Cette description est purement illustrative et non limitative et doit être lue en regard des dessins annexés sur lesquels :

- la figure 1 est un graphe sur lequel on a représenté des contours iso-célérité sur un graphe sur lequel on a représenté en abscisse une direction de surface et en ordonnée une direction de profondeur ;
- la figure 2 est un graphe dont les abscisse et ordonnée correspondent à celles de la figure 1, sur lequel on a représenté les lignes isochrones déterminées par un traitement conforme à un mode de mise en oeuvre de l'invention ;
- la figure 3 est un graphe dont les abscisse et ordonnée correspondent à celles de la figure 1, sur lequel on a représenté les lignes isochrones déterminées par un traitement conforme à un autre mode de mise en oeuvre de l'invention.

Dans ce qui suit, la résolution de l'équation eikonal avec comme inconnue la célérité v est décrite en coordonnées cartésiennes dans le cas d'une intégration selon les directions verticales.

On comprendra bien entendu que la résolution de l'équation éikonal avec comme inconnue la célérité v pourrait également être réalisée autrement, notamment avec des intégrations en coordonnées sphériques ou encore selon des trajets quelconques.

Avec comme variable la célérité v, l'équation eikonal s'écrit en coordonnées cartésiennes :

$$[2] \qquad d^2/v^2 \, (v_x^2 + v_y^2 + v_z^2) - 2/v \, (x \, v_x + y \, v_y + z \, v_z) + 1 - v^2/c^2 = 0$$

où $v_x$, $v_y$, $v_z$ sont les dérivées partielles de la célérité v par rapport aux axes x, y et z et sont les nouvelles inconnues.

On constatera sur cette équation [2] que :

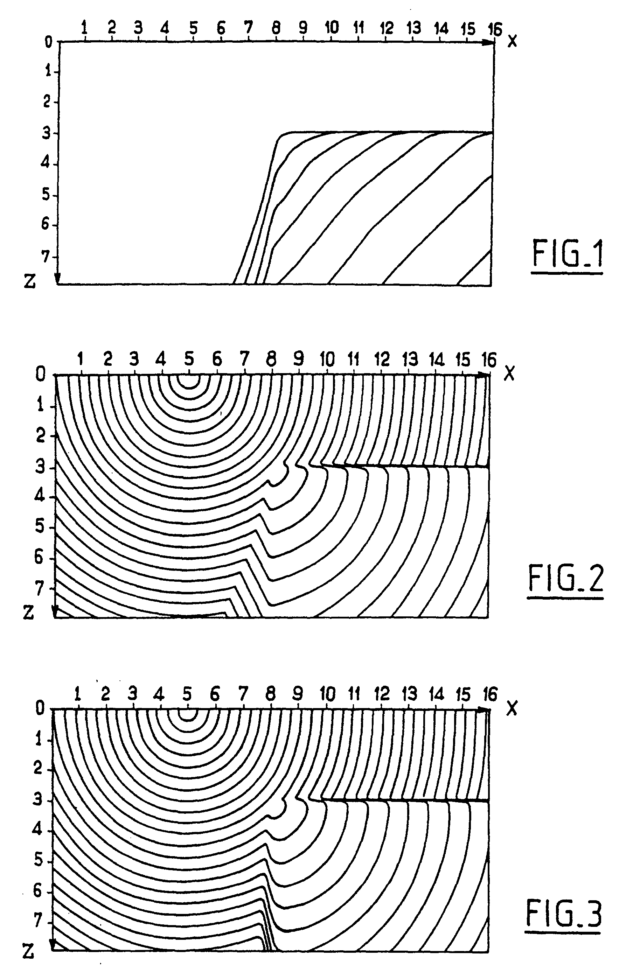

- dans les cas d'une intégration à travers un milieu homogène, où v et c sont constants et égaux, les dérivées partielles de v selon les axes x, y et z seront égales à 0 ; la détermination du temps de parcours t = d/v sera exacte à 100% ;
- dans le cas d'une intégration à travers un milieu hétérogène, c'est à dire à travers un milieu dans lequel la vélocité c de propagation varie spatialement, alors la célérité v varie également mais moins vite que les temps de parcours. C'est ce qu'illustre la comparaison des figures 1 et 2.

Par conséquent, on comprend que, pour des précisions similaires, la résolution de l'équation eikonal peut être réalisée avec des pas d'échantillonnage beaucoup plus lâches que dans le cas de la résolution de l'équation [1] avec comme variable la variable temporelle.

Plus précisément, l'équation [2] peut être résolue par une extrapolation en différences finies selon l'axe z vertical, dans le sens descendant en direction du sous-sol, à partir des valeurs de surface v(x, y, z=0), l'expression $v_z$ étant intégrée comme une fonction des dérivées partielles $v_x$ et $v_y$.

La stabilité de l'algorithme est assurée par le choix d'un pas d'intégration dz inférieur à l'échantillonnage spatial horizontal, ainsi que par l'utilisation d'un filtre de lissage à trois termes dans les directions x et y (avec une largeur de bande proportionnelle au rapport entre les échantillonnages vertical et horizontal).

Un tel traitement numérique ne permet pas de traiter des angles de propagation supérieurs à arctg(dx/dz) ou arctg(dy/dz). Au-delà de ces angles et jusqu'à 90°, on met en oeuvre pour chaque point quatre extrapolations 2D, en utilisant le même algorithme dégénéré en 2D.

Ces extrapolations sont réalisées en quatre demi-plans horizontaux (x positif, x negatif, y positif et y negatif) prenant la projection de la source horizontale comme origine.

On choisit ensuite le temps de parcours le plus court entre le résultat de l'extrapolation dans le sens descendant et le résultat des quatre extrapolations horizontales.

Un traitement du type qui vient d'être décrit permet une très grande précision de résultat avec des pas d'échantillonnage importants dans les directions horizontales. Le pas d'échantillonnage n'est limité que par la nécessité de prendre en considération les variations de vélocité latérale dans les modèles de vélocité en entrée de calcul, qui imposent généralement audit pas d'être inférieur à 100 mètres.

On notera que la résolution par intégration dans le sens descendant présente l'avantage de permettre de supprimer les trajets remontants des ondes (principalement les ondes réfractées).

Par ailleurs, pour supprimer les réflexions post-critiques, on met avantageusement en oeuvre un deuxième passage de traitement d'intégration, dans le sens montant cette fois-ci.

Egalement, le choix du minimum de temps de parcours entre le résultat d'intégration dans le sens descendant et la mise à jour 2D peut faire apparaître de nouvelles ondes réfractées à chaque nouvelle profondeur.

L'apparition de ces ondes réfractées peut être préjudiciable notamment dans les zones dans lesquelles les contrastes de vélocité latérale sont verticalement invariants, ce qui correspond à des situations géologiques qui ne sont pas rares (murs de sel verticaux, falaises dues à des failles , par exemple).

Pour atténuer les conséquences de ces cas de figure, le traitement interdit à l'angle entre la direction verticale et le vecteur gradient des temps de parcours les valeurs inférieures à l'angle entre la direction verticale et le vecteur radial qui relie la source au point considéré. Cette contrainte est imposée en modifiant les valeurs de $v_x$ et $v_y$ dans l'expression de $v_z$.

On a représenté sur la figure 3 les lignes isochrones obtenues après un traitement en ce sens.

Cette figure 3 est à comparer avec la figure 2, sur laquelle on a représenté les mêmes lignes isochrones obtenues avec le traitement proposé par l'invention, mais sans imposer la contrainte angulaire précitée.

On notera que cette figure 2 correspond à la résolution de l'équation eikonal avec comme inconnue la variable célérité, dans un volume de 16 km * 16 km * 8 km échantillonnés tous les 100 m en x, y et z. Cette résolution prend 150 secondes sur un IBM Risk6000-25W ou 25 secondes sur un processeur SPP1600. Les précisions sont de l'ordre de la milli- seconde.

Par conséquent, les temps de calcul nécessaires sont peu importants, ce qui permet de recalculer les temps de parcours, dès qu'on le souhaite.

Le traitement proposé par l'invention permet en outre de meilleures inversions globales de l'image obtenue.

Ainsi que cela a été indiqué précédemment, la résolution de l'équation eikonal en coordonnées cartésiennes peut bien entendu être remplacée par des résolutions utilisant d'autres coordonnées et notamment des coordonnées sphériques. Dans ce cas, il n'est pas nécessaire de compléter l'extrapolation par une extrapolation 2D.

Egalement, on notera qu'en travaillant sur la célérité plutôt que sur son inverse, la sensibilité aux erreurs numériques des temps de parcours finalement calculés est plus faible.

**Revendications**

1.    Procédé de traitement sismique dans lequel pour déterminer les temps de parcours (t) d'une onde acoustique entre une source sismique de coordonnées $(x_s, y_s, z_s)$ et un point du sous-sol de coordonnées (x, y, z), on résolve l'équation eikonal qui s'écrit en coordonnées cartésiennes :

$$t_x^2 + t_y^2 + t_z^2 = 1/c^2$$

avec $t_x = \delta t/\delta x$, $t_y = \delta t/\delta y$ et $t_z = \delta t/\delta z$,
où $\delta t/\delta x$, $\delta t/\delta y$ et $\delta t/\delta z$ représentent des estimations des dérivées partielles des temps de parcours (t) par rapport aux coordonnées cartésiennes x, y, z et où c représente la vitesse de propagation, **caractérisé en ce que** pour résoudre l'équation eikonal, on utilise comme inconnue dans l'équation eikonal la variable célérité v et on met en oeuvre un traitement d'extrapolation en différences finies sur la variable célérité (v), laquelle est égale au rapport de la distance entre la source sismique et le point du sous-sol sur le temps de propagation (t) entre ladite source et ledit point.

2. Procédé selon la revendication 1, **caractérisé en ce que** ce traitement d'extrapolation est mis en oeuvre en coordonnées cartésiennes.

3. Procédé selon la revendication 2, **caractérisé en ce que** ledit traitement comprend une extrapolation dans le sens descendant le long d'un axe z dirigé vers le sous-sol complétée par des extrapolations 2D horizontales, les temps de parcours (t) choisis à l'issue de ce traitement étant le temps le plus court entre le résultat de l'extrapolation dans le sens descendant et le résultat des extrapolations 2D horizontales.

4. Procédé selon la revendication 3, **caractérisé en ce qu'**on met en outre en oeuvre un traitement d'extrapolation dans le sens montant.

5. Procédé selon la revendication 1, **caractérisé en ce que** le traitement d'extrapolation est mis en oeuvre en coordonnées sphériques.

6. Procédé de prospection sismique 3D selon lequel on acquiert des données sismiques au moyen d'au moins une source acoustique et de capteurs sismiques, on traite ces données sismiques pour obtenir une information sur la géologie du sous-sol, en mettant en oeuvre une migration desdites données, **caractérisé en ce que** pour la mise en oeuvre du traitement de migration on détermine préalablement les temps de parcours (t) des ondes acoustiques en mettant en oeuvre le procédé selon l'une des revendications précédentes.

**Claims**

1. A seismic processing method in which the eikonal equation is solved to determine the travel times (t) of a sound wave between a seismic source of coordinates $(x_s, y_s, z_s)$ and a point under ground of coordinates (x, y, z), said eikonal equation being written as follows in Cartesian coordinates:

$$t_x^2 + t_y^2 + t_z^2 = 1/c^2$$

with $t_x = \delta t/\delta x$, $t_y = \delta t/\delta y$, and $t_z = \delta t/\delta z$
where $\delta t/\delta x$, $\delta t/\delta y$, and $\delta t/\delta z$ are estimates of the partial derivatives of the travel times (t) relative to Cartesian coordinates $\underline{x}$, $\underline{y}$, and $\underline{z}$, and where $\underline{c}$ represents the speed of propagation, the method being **characterized in that** to solve the eikonal equation, the velocity variable v is used as the unknown in the eikonal equation and finite difference extrapolation processing is performed on the velocity variable (v), which variable is equal to the ratio of the distance between the seismic source and the underground point divided by the propagation time (t) between said source and said point.

2. A method according to claim 1, **characterized in that** the extrapolation processing is implemented in Cartesian coordinates.

3. A method according to claim 2, **characterized in that** said processing comprises extrapolation in the downward direction along an axis $\underline{z}$ pointing down into the ground, which extrapolation is associated with horizontal 2D extrapolations, the travel time (t) selected at the end of the processing being the shortest of the times that result from extrapolation in the downward direction and extrapolation in the horizontal 2D directions.

4. A method according to claim 3, **characterized in that** extrapolation processing is also performed in the upward direction.

5. A method according to claim 1, **characterized in that** the extrapolation processing is implemented in spherical coordinates.

6. A 3D seismic prospection method in which seismic data is acquired by means of a sound source and seismic sensors, and the seismic data is processed by implementing migration of said data to obtain information concerning subsurface geology, the method being **characterized in that** to implement the migration processing, the travel times (t) of the sound waves are previously determined by implementing the method according to any preceding claim.

**Patentansprüche**

1. Verfahren zur seismischen Verarbeitung, bei dem zum Festlegen der Laufzeiten (t) einer akustischen Welle zwischen einer seismischen Quelle mit den Koordinaten ($x_s$, $y_s$, $z_s$) und einem unterirdischen Punkt mit den Koordinaten (x, y, z) die eikonale Gleichung gelöst wird, die in kartesischen Koordinaten lautet:

$$t_x^2 + t_y^2 + t_z^2 = \frac{1}{c^2},$$

mit $t_x = \frac{\delta t}{\delta x}$, $t_y = \frac{\delta t}{\delta y}$ und $t_z = \frac{\delta t}{\delta z}$,
wobei $\frac{\delta t}{\delta x}$, $\frac{\delta t}{\delta y}$ und $\frac{\delta t}{\delta z}$ die Abschätzungen für die
partiellen Ableitungen der Laufzeiten (t) in Bezug auf die kartesischen Koordinaten x, y und z sind und c die Fortpflanzungsgeschwindigkeit angibt,
**dadurch gekennzeichnet, dass**
zur Lösung der eikonalen Gleichung als Unbekannte in der eikonalen Gleichung die variable Geschwindigkeit v verwendet wird und eine Extrapolation finiter Differenzen bezüglich der variablen Geschwindigkeit (v) durchgeführt wird, die gleich dem Verhältnis des Abstands zwischen der seismischen Quelle und dem unterirdischen Punkt zu der Fortpflanzungszeit (t) zwischen der Quelle und dem Punkt ist.

2. Verfahren nach Anspruch 1,
**dadurch gekennzeichnet, dass**
die Extrapolation in kartesischen Koordinaten durchgeführt wird.

3. Verfahren nach Anspruch 2,
**dadurch gekennzeichnet, dass**
die Bearbeitung eine entlang einer zum Boden gerichteten z- Achse absteigende Extrapolation umfasst, die durch horizontale 2D- Extrapolationen ergänzt wird, wobei die Laufzeit (t), die am Ende der Bearbeitung gewählt wird, die kürzeste Zeit zwischen dem Ergebnis der absteigenden Extrapolation und dem Ergebnis der horizontalen 2D-Extrapolationen ist.

4. Verfahren nach Anspruch 3,
**dadurch gekennzeichnet, dass**
außerdem eine aufsteigende Extrapolation durchgeführt wird.

5. Verfahren nach Anspruch 1,
**dadurch gekennzeichnet, dass**
die Extrapolation in Kugelkoordinaten durchgeführt wird.

6. Verfahren zur seismischen 3D- Prospektion, bei dem seismische Daten mittels wenigstens einer akustischen Quelle und seismischen Messgeräten erfasst werden und die seismischen Daten bearbeitet werden, so dass man eine Aussage über die unterirdische Geologie erhält, indem eine Migration der Daten durchgeführt wird,
**dadurch gekennzeichnet, dass**
zur Durchführung der Migration vorher die Laufzeiten (t) der akustischen Wellen bestimmt werden, indem das Verfahren nach einem der vorangehenden Ansprüche durchgeführt wird.

FIG.1

FIG.2

FIG.3